# EUROPEAN PATENT APPLICATION

(11) **EP 2 221 795 A1**
(43) Date of publication of application: **25.08.2010**
(21) Application number: 09170921.2
(22) Date of filing: 22.09.2009
(51) Int. Cl.: G09G 3/20, G09G 5/00

(54) **Digital video interface supporting dual-link mode and single-link mode**

(30) Priority: 23.02.2009 KR 20090014707
(71) Applicant: Samsung Electronics Co., Ltd., Suwon-si, Gyeonggi-do 442-742 (KR)
(72) Inventor: Kim, Jin-hun, Seoul (KR)
(74) Representative: Land, Addick Adrianus Gosling

(57) **Abstract**

A display apparatus and a control method thereof are provided. The display apparatus includes a display unit, a reception unit which receives an image signal from an image supply source, and an image processing unit which includes a plurality of input terminals that receive the image signal from the reception unit. If the image signal is a divided image signal, i.e. it receives an image signal through a Digital Video Interface (DVI) in a dual-link mode, the image processing unit processes and combines parts of the divided image signal to output a processed image signal to be displayed on the display unit. If one of the input terminals receives a first part of the divided image and the another one of the input terminals does not receive a second part of the divided image signal, a controller which controls the display unit to display thereon an error message.

## Description

Apparatuses and methods consistent with the present invention relate to a display apparatus and a control method thereof, and more particularly, to a display apparatus which identifies whether an image signal is received normally from an image supply source, and a control method thereof.

A display apparatus processes, in various ways, an image signal supplied by an image supply source and displays an image on a display panel such as a liquid crystal display (LCD) or a plasma display panel (PDP). To receive such an image signal, the display apparatus may include reception/transmission interfaces in various standards for reception and transmission of image signals with the image supply source. Among those standards, Digital Visual Interface (DVI) or High Definition Multimedia Interface (HDMI), which corresponds to digital image signals, are widely used.

If the display apparatus receives an image signal through a DVI interface, the image signal may be transmitted in a single-link mode or a dual-link mode corresponding to the data volume of the image signal. Unlike the single-link mode, in the dual-link mode, input channels of the image signal are plurally formed, and the image signal is divided into a plurality of signals to be input to each channel.

To normally display the image signal input in the dual-link mode, the DVI standard cable between the display apparatus and the image supply source should correspond to the dual-link mode. If an image signal in the dual-link mode is input through a cable which supports only the single-link, the image is not normally displayed.

According to an aspect of the present invention, there is provided a display apparatus including: a display unit; a reception unit which receives an image signal from an image supply source; an image processing unit which includes a plurality of input terminals that receive the image signal from the reception unit, wherein if the image signal is a divided image signal, the image processing unit processes and combines parts of the divided image signal to output a processed image signal to be displayed on the display unit; and a controller which controls the display unit to display thereon an error message if one of the input terminals receives a first part of the divided image signal and the another one of the input terminals does not receive a second part of the divided image signal is not input to the other one of the input terminals.

The image processing unit of the display apparatus may further include a detector which detects whether the image signal is the divided image signal based on a synchronous signal frequency of the image signal.

The detector may use a table to detect whether the image signal is the divided image signal based on at least one of a horizontal synchronous signal frequency and a vertical synchronous signal frequency.

The image processing unit may further include a first scaler which scales a first part of the divided image signal input to a first terminal of the the input terminals; a second scaler which scales a second part of the divided image signal input to a second terminal of the input terminals, and the controller may determine during a preset time whether the second part of the divided image signal is input to the second scaler if it is determined that the first part of the divided image signal is input to the first scaler, and may display the error message if it is determined that the second part of the divided image signal is not input to the second scaler during the preset time.

The image processing unit may further include a scaler which scales a first signal input to a first terminal of the plurality of input terminals and a second signal input to a second terminal of the plurality of terminals, respectively, and the controller may determine whether synchronous signal timings are the same for the first and second signals if it is determined that the first signal is a first part of the divided image signal, and may determine that the second signal is a second partof the divided image signal if the synchronous signal timing is the same.

The reception unit may receive the image signal through a digital visual interface (DVI) standard cable from the image supply source, and the controller may control the error message to include information about the cable.

The display unit may include a light-emitting diode (LED), and the controller may control the LED to emit light or flicker to display the error message.

According to another aspect of the present invention, there is provided a control method of a display apparatus, the control method including: receiving an image signal from an image supply source;if the image signal is a divided image signal and each of a plurality of parts of the divided image signal are received by a plurality of input terminals, processing and combining the parts of the divided image signal to generate a processed image signal and displaying the processed image signal on a display unit; and if a first part of the divided image signal is received by one of the input terminals and another one of the input terminals does not receive a second part of the divided image signal, displaying an error message on the display unit.

The displaying the error message may include determining whether the image signal is the divided image signal based on a synchronous signal frequency of the image signal.

The determining whether the image signal is the divided image signal may include using a prestored table to determine whether the image signal is the divided image signal based on at least one of a horizontal synchronous signal frequency and a vertical synchronous signal frequency of the image signal.

The display apparatus may include a first scaler and a second scaler , and the displaying the error message may include determining during a preset time whether a second part of the divided image signal is input to the second scaler if it is determined that a first part of the divided image signal is input to the first scaler, and displaying the error message if it is determined that a second part of the divided image signal is not input to the second scaler during the preset time.

The plurality of input terminals may include a first input terminal and a second input terminal which receive a first signal and a second signal, and the displaying the error message may include determining whether synchronous signal timings are the same for the first and second signals if it is determined that the first signal is a part of the divided image signal and determining that the second signal is a second part of the divided image signal if the synchronous signal timing is the same.

The display apparatus may receive the image signal through a DVI standard cable from the image supply source, and the displaying the error message may include displaying the error message including information about the cable.

The display apparatus may include a light-emitting diode (LED), and the displaying the error message may include displaying the error message by emitting light or flickering a light of the LED.

### BRIEF DESCRIPTION OF THE DRAWINGS

The above and/or other aspects of the present invention will become apparent and more readily appreciated from the following description of the exemplary embodiments, taken in conjunction with the accompanying drawings of which:
FIG. 1 is a perspective view of a display system according to a first exemplary embodiment of the present invention;
FIG. 2 is a block diagram of a display apparatus in FIG. 1;
FIG. 3 is a flowchart of a control process of a first controller in the display apparatus in FIG. 1;
FIG. 4 is a flowchart of a control process of a second controller in the display apparatus in FIG. 1;
FIG. 5 is a block diagram of a display apparatus according to a second exemplary embodiment of the present invention;
FIG. 6 is a flowchart of a control process of a display apparatus in FIG. 5; and
FIG. 7 is a block diagram of a display apparatus according to a third exemplary embodiment of the present invention.

### DETAILED DESCRIPTION OF EXEMPLARY EMBODIMENT

Hereinafter, exemplary embodiments of the present invention will be described with reference to accompanying drawings, wherein like numerals refer to like elements and repetitive descriptions will be avoided as necessary.

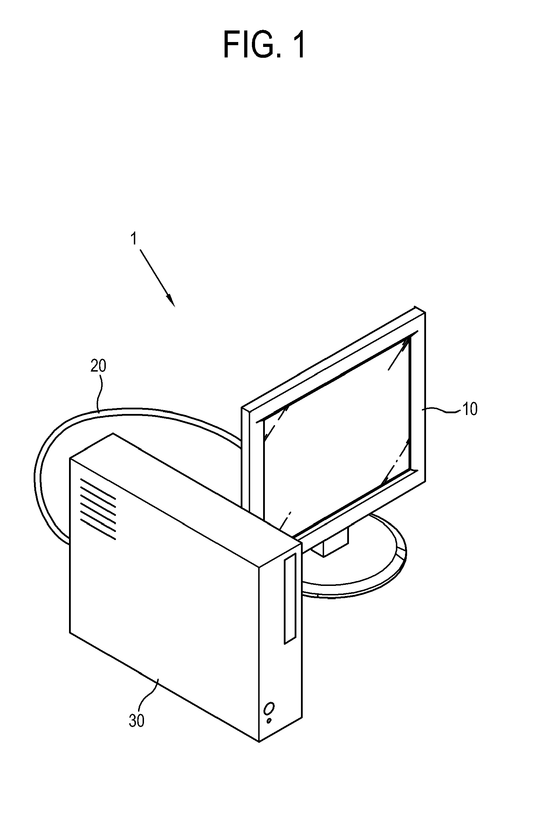

FIG. 1 illustrates an example of a display system 1 according to a first exemplary embodiment of the present invention.

As shown therein, the display system 1 according to the present exemplary embodiment is a system which processes an image signal to display an image. The display system 1 includes a display apparatus 10 to display an image thereon, and an image supply source 30 to transmit an image signal to the display apparatus 10 corresponding to the image. The display system 1 includes a cable 20 to transmit an image signal from the image supply source 30 to the display apparatus 10. The cable 20 according to the present exemplary embodiment complies with DVI standards, but not limited thereto. Alternatively, the cable 20 may comply with other standards such as HDMI, and may be provided in a wireless manner rather than wired one.

In the present exemplary embodiment, the display apparatus 10 includes a monitor, but not limited thereto. Other than the monitor, the display apparatus 10 may alternatively include a television (TV), a personal video recorder (PVR), an electronic frame, a personal multimedia player (PMP), etc.

The image supply source 30 includes a computer main body having a central processing unit (CPU) (not shown) and a graphic board (not shown) and transmits an image signal locally to the display apparatus 10, but is not limited thereto. Alternatively, the image supply source 30 may include a server which supplies an image signal to a network, or a transmission device of a broadcasting station transmitting a broadcasting signal through terrestrial wave or a cable, etc.

Based on the DVI standards, the image supply source 30 transmits an image signal corresponding to a single-link or dual-link to the display apparatus 10. While an image signal corresponding to the single-link is transmitted to a single input channel without any division, an image signal corresponding to the dual-link is divided into a plurality of images signals corresponding to a plurality of input channels and then input to each of the input channels. If the data volume of the image signal is large, e.g. if a high-resolution image is transmitted, an image signal corresponding to the dual-link is generated and transmitted.

If an image signal corresponding to the dual-link is to be transmitted, the image supply source 30 divides the image signal into odd data and even data and then transmits the data to two input channels, respectively, but is not limited thereto. Alternatively, the image supply source 30 may divide the image signal in different ways and the number of input channels may vary.

There are two types of cables 20: a first type which supports only single-link signals and a second type which can support both single-link signals and dual-link signals. The first type supports a bandwidth of 165 MHz, i.e., a processing rate of 165 million pixels per second with only one input channel while the second type supports a bandwidth of 330 MHz in total with two input channels. If an image signal corresponding to the dual-link is transmitted from the image supply source 30 to the cable 20 supporting only the single-link, a normal signal is not transmitted and the image deteriorates.

According to the present exemplary embodiment, the above case is detected and the detection result is displayed for a user to inspect the display system 1 including the cable 20.

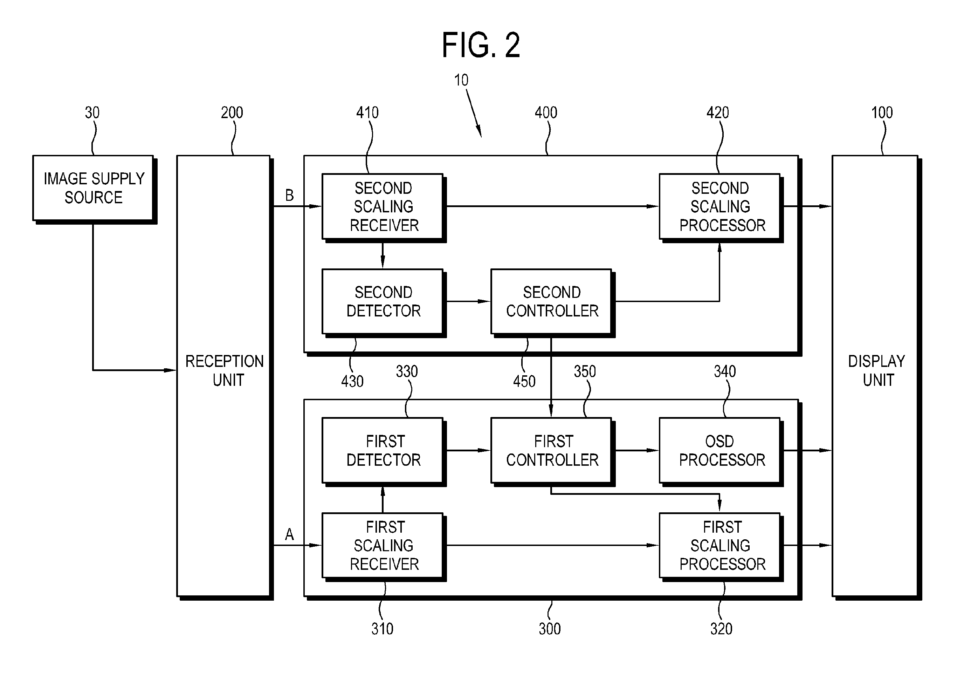

Hereinafter, sub elements of the display apparatus 10 will be described with reference to FIG. 2. FIG. 2 is a block diagram of the display apparatus 10 in FIG. 1.

In the exemplary embodiment below, it will be assumed that if an image signal corresponds to the dual-link, the image signal is divided to be transmitted through a plurality of paths, and if an image signal corresponds to the single-link, the image signal is transmitted through a single path without any division. This is for purposes of convenience, and does not limit the spirit of the present invention.

As shown in FIG. 2, the display apparatus 10 according to the present exemplary embodiment includes a display unit 100, a reception unit 200 which receives from the image supply source 30 a signal divided into a plurality of images signals or receives an undivided signal, image processing units 300 and 400 which includes input terminals A and B to receive parts of the divided image signal, respectively, and combines the parts of the divided image signal, and controllers 350 and 450 which control display of abnormal signals if the image signals are not normally input to at least one of the plurality of input terminals A and B in the case where the divided image signals are input.

With the foregoing configuration, if it is determined that a part of the divided image signal is input to one of the input terminals A and B, i.e., if it is determined that the input image signal corresponds to dual-link, the display apparatus 10 according to the present exemplary embodiment determines whether the rest of the divided image signal is input to the other one of the input terminals A and B. If the rest of the divided image signal is not input to the other one of the input terminals A and B, the display apparatus 10 displays an error message.

Accordingly, if the image signal is divided and input, a user may recognize whether the divided image signal is normally input and may respond to it.

Hereinafter, each element will be described in detail.

The display unit 100 displays an image signal processed by the image processing units 300 and 400. The display unit 100 may include liquid crystal, plasma, light-emitting diode, organic light-emitting diode, surface-conduction electron-emitter, carbon nano-tube, nano-crystal displays, etc.

The reception unit 200 receives an image signal from the image supply source 30 and transmits the image signal to the image processing units 300 and 400. The reception unit 200 may correspond to DVI standards and receive transition minimized differential signaling (TMDS) image signal through the cable 20.

The reception unit 200 transmits the received image signal to the plurality of input terminals A and B corresponding to whether the image signal is divided.

If the received image signal corresponds to the single-link, i.e., if an undivided image signal is received, the reception unit 200 transmits the image signal to a first input terminal A. In this case, the reception unit 200 does not transmit the image signal to a second input terminal B. If the received image signal corresponds to the dual-link, i.e., if the image signal is divided and input, the reception unit 200 transmits part of the divided image signal to the input terminals A and B, respectively.

The image processing units 300 and 400 process an image signal input from the reception unit 200 and display an image on the display unit 100. In the present exemplary embodiment, the image processing units 300 and 400 include two scalers corresponding to the input terminals A and B, but the present invention is not limited thereto.

In the present exemplary embodiment, detectors 330 and 430, an on screen display (OSD) processor 340 and controller 350 and 450 which will be described later are incorporated into the image processing units 300 and 400. However, such configuration does not limit the spirit of the present invention, and all or any of the above configuration may be provided as an additional configuration.

The image processing units 300 and 400 include a first scaler 300 which scales an input signal input to the first input terminal A, and a second scaler 400 which scales an input signal input to the second input terminal B.

The image processing units 300 and 400 perform different operations as follows depending on whether the image signal transmitted from the reception unit 200 is a single-link signal or a dual-link signal.

If the image signal corresponds to the single-link, the image signal is input to the first input terminal A from the reception unit 200, but not to the second input terminal B. Then, the first scaler 300 scales the image signal input to the first input terminal A and outputs the image signal to the display unit 100. As the image signal is not input to the second input terminal B, the second scaler 400 does not operate.

If the image signal corresponds to the dual-link, the image signal is input to the first input terminal A and the second input terminal B, respectively, from the reception unit 200. Then, the first and second scalers 300 and 400 scale the divided image signal input to the input terminals A and B and output the image signal to the display unit 100. Here, the image processing units 300 and 400 may include an additional configuration to combine the image signals output from the first and second scalers 300 and 400.

The first scaler 300 operates in all cases regardless of whether the image signal transmitted to the reception unit 200 corresponds to the single-link or dual-link while the second scaler 400 operates only when the image signal corresponds to the dual-link.

In the present exemplary embodiment, it is determined whether the image signal input to the first input terminal A corresponds to the dual-link to determine whether the image signal transmitted to the reception unit 200 corresponds to the dual-link. If it is determined that the image signal input to the first input terminal A corresponds to the dual-link, it is determined whether the image signal corresponding to the dual-link is normally input to the second input terminal B. If it is determined that the image signal is not input normally, the error message is displayed.

The first scaler 300 includes a first scaling receiver 310 to receive an image signal input to the first input terminal A, a first scaling processor 320 to scale an image signal received by the first scaling receiver 310, a first detector 330 to detect whether the image signal input to the first input terminal A corresponds to the dual-link, an OSD processor 340 to generate an OSD message to be displayed on the display unit 100, and a first controller 350 to control operations of the sub elements of the first scaler 300.

The second scaler 400 includes a second scaling receiver 410 to receive an image signal input to the second input terminal B, a second scaling processor 420 to scale an image signal received by the second scaling receiver 410, a second detector 430 to detect whether the image signal input to the second input terminal B is normally received, and a second controller 450 to control operations of sub elements of the second scaler 400 and to transmit the detection result of the second detector 430 to the first controller 350.

Hereinafter, the elements of the first scaler 300 will be described.

With respect to the image signal input to the first input terminal A, more specifically, to the first scaling receiver 310, the first detector 330 detects whether a part of the divided image signal or an undivided image signal is input. The part of the divided image signal means an image signal corresponding to the dual-link, and the undivided image signal means an image signal corresponding to the single-link. The first detector 330 transmits the detection result to the first controller 350.

The method of detecting the nature of the image signal by the first detector 330 is not limited to the foregoing. According to the present exemplary embodiment, the first detector 330 extracts a synchronous signal of the image signal received by the first scaling receiver 310, and detects whether the image signal corresponds to the dual-link or the single-link based on the extracted synchronous signal. This detection is based on the difference of frequency timings of the synchronous signals depending on the division of the input image signal.

More specifically, the first detector 330 may calculate horizontal and vertical synchronous signal frequencies, horizontal and vertical active pixel values, horizontal and vertical total values, etc. The first detector 330 uses a prestored table to identify whether the signal is the dual-link or the single-link by using the horizontal synchronous signal frequency and the vertical synchronous signal frequency as detection factors. The first detector 330 may calculate the horizontal synchronous signal frequency and the vertical synchronous signal frequency of the image signal and determine whether the image signal corresponds to the dual-link or the single-link from the table based on the calculated frequencies.

However, the present invention is not limited to the foregoing, and the first detector 330 may determine whether the image signal corresponds to the dual-link or the single-link from the table using the horizontal synchronous signal frequency and the vertical total value as the detection factors. Otherwise, the first detector 330 may calculate the vertical synchronous signal frequency from the vertical total value.

The OSD processor 340 generates an OSD message or the OSD image including predetermined information and displays the OSD message or the OSD image on the display unit 100 according to a control of the first controller 350.

The first controller 350 controls the first scaling processor 320 to process the image signal received by the first scaling receiver 310. The first controller 350 controls the first scaling processor 320 to display the image signal on the display unit 100 depending on whether the image signal corresponds to the single-link or the dual-link.

With respect to the image signal received by the first scaling receiver 310, the first controller 350 determines whether the image signal corresponds to the dual-link, i.e., whether a part of the divided image signal is input. As a basis for such determination, the first controller 350 may receive the detection result of the first detector 330. If it is determined from the transmitted detection result that the image signal corresponds to the single-link, the first controller 350 controls the first scaling processor 320 to process the image signal corresponding to the single-link.

If it is determined that the image signal received by the first scaling receiver 310 corresponds to the dual-link, the first controller 350 determines whether the image signal corresponding to the dual-link is normally input to the second input terminal B. If it is determined that the image signal is normally input to the second input terminal B, the first controller 350 controls the first scaling processor 320 to process the image signal input to the first input terminal A corresponding to the dual-link. If it is determined that the image signal is not normally input to the second input terminal B, the first controller 350 controls the OSD processor 340 to display an error message on the display unit 100.

As a basis for determining whether the image signal corresponding to the dual-link is normally input to the second input terminal B, the first controller 350 determines that the image signal received by the first scaling receiver 310 corresponding to the dual link, and then monitors whether the a control signal is transmitted from the second scaler 400 during preset time.

More specifically, the first controller 350 is connected with the second controller 450 through general purpose input/output line or other communication lines such as I2C and UART, and receives a control signal including information about whether the image signal corresponding to the dual-link is normally input to the second input terminal B, from the second controller 450.

The point of timing where the image signal is determined may be different between the first controller 350 and the second controller 450. Thus, the first controller 350 monitors during preset time whether the control signal is received.

If the image signal is not normally input, the first controller 350 may receive a control signal corresponding to a failure to receive the normal image signal. If the control signal is not received during preset time, the first controller 350 determines that the image signal is not normally input to the second input terminal B and displays an error message.

In the present invention, the error message is displayed on the display unit 100 as an OSD message or an OSD image, but the present invention is not limited thereto. Alternatively, the LED may emit light or flicker to display the error message since the display unit 100 includes the LED. Otherwise, a sound as an error message may be output through a speaker (not shown).

Hereinafter, elements of the second scaler 400 will be described.

The second detector 430 detects whether the image signal input to the second input terminal B, more specifically, the image signal received by the second scaling receiver 410 corresponds to the dual-link and detects whether the image signal is normally input. The second detector 430 transmits the detection result to the second controller 450.

The second detector 430 may extract a data enable signal of the image signal and a synchronous signal such as a horizontal synchronous signal and a vertical synchronous signal and detect based on the nature of the extracted synchronous signal whether the image signal is normal. For example, in the present exemplary embodiment, the image signal received by the second scaling receiver 410 corresponds to the dual-link. Thus, if the image signal corresponds to the dual-link and the size of the image signal is within an allowance of a preset value, the second detector 430 may detect that the image signal is normal. However, this is an exemplary embodiment and does not limit the spirit of the present invention.

If it is determined that the image signal received by the second scaling receiver 410 corresponds to the dual-link, the second controller 450 controls the second scaling processor 420 to scale the image signal. If the image signal is transmitted to the second scaling receiver 410, the second controller 450 determines whether the image signal is normal according to the detection result of the second detector 430.

When the determination on the image signal is completed, the second controller 450 transmits the determination result to the first controller 350. For example, if the second controller 450 is connected with the first controller 350 through the GPIO line and if the image signal is input normally, a high signal may be transmitted. If the image signal is not input normally, a low signal may be transmitted. Alternatively, however, the configuration of transmitting the detection result may vary.

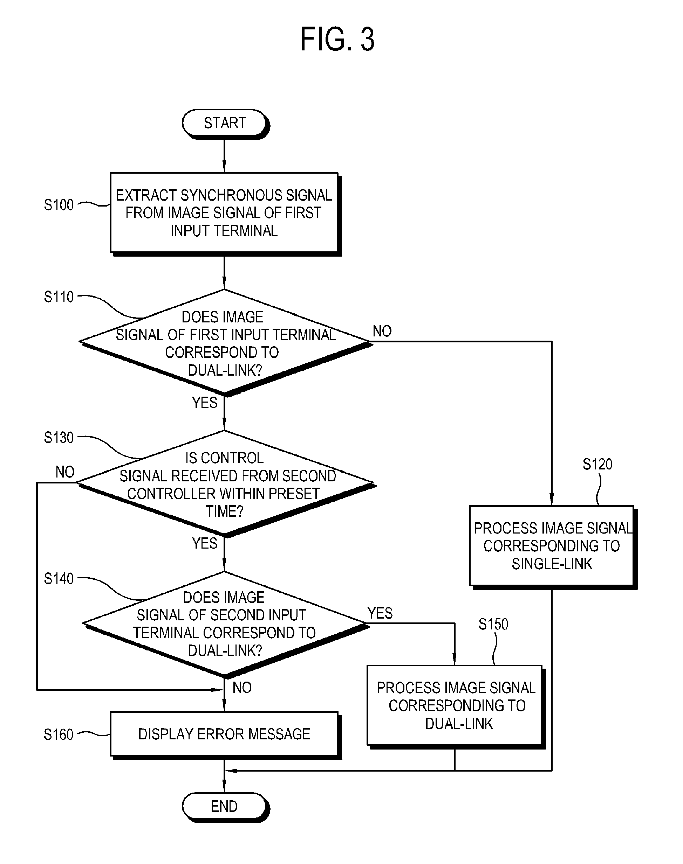

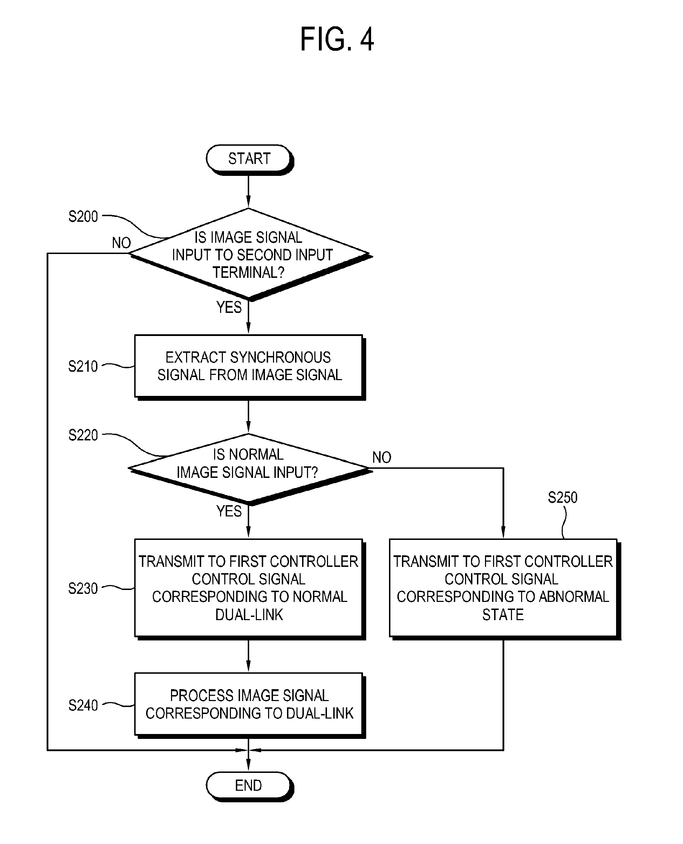

With the foregoing configuration, a control process of the display apparatus 10 according to the present exemplary embodiment will be described with reference to FIGS. 3 and 4. The control process will be described separately for the first controller 350 and the second controller 450.

FIG. 3 is a flowchart of the control process of the first controller 350.

As shown therein, if the image signal is input to the first input terminal A, the synchronous signal is extracted from the image signal by the first detector 330 (S100). The first detector 330 determines based on the extracted synchronous signal whether the image signal corresponds to the dual-link (S110).

If it is determined that the image signal does not correspond to the dual-link, the first controller 350 determines that the image signal corresponds to the single-link and processes the image signal corresponding to the single-link (S120). Then, the image signal processed by the first scaler 300 is displayed as an image on the display unit 100.

If it is determined that the image signal corresponds to the dual-link, the first controller 350 determines that the image signal corresponds to the dual-link and determines whether the control signal is received from the second controller 450 within preset time (S130).

If the control signal is received within the preset time, the first controller 350 determines based on information included in the control signal whether the image signal of the second input terminal B corresponds to a normal dual-link signal (S140).

If it is determined that the image signal of the second input terminal B corresponds to a normal dual-link signal, the first controller 350 processes the image signal corresponding to the dual-link (S150). Then, the image signal is divided and processed by the first and second scalers 300 and 400. The processed image signals are combined to be displayed on the display unit 100.

If it is determined that the image signal of the second input terminal B does not correspond to a normal dual-link signal, the first controller 350 displays an error message (S160). Then, a user may check the displayed error message and inspect the system.

If it is determined that the control signal is not received within the preset time in operation S130, the first controller 350 determines that the image signal of the second input terminal B does not correspond to a normal dual-link signal and displays the error message (S140).

The content of the error message is not limited and may include various information. For example, the error message according to the present exemplary embodiment is mainly displayed if the image signal corresponding to the dual-link is transmitted through the cable 20 supporting only the single-link. Accordingly, the error message may include information related to the cable 20 such as "check whether the cable supports dual-link" or "check the cable".

A user may check such error message and inspect the connection of the cable 20 or replace the cable 20.

FIG. 4 is a flowchart of a control process of the second controller 450.

As shown therein, if an image signal is input to the second input terminal B (S200), a synchronous signal is extracted from the image signal (S210). The second controller 450 determines based on the extracted synchronous signal whether the image signal is normally input to the second input terminal B (S220).

If it is determined that the image signal is input normally, the second controller 450 transmits to the first controller 350 a control signal indicating that the image signal corresponds to a normal dual-link (S230). The second controller 450 processes the image signal corresponding to the dual-link (S240).

If it is determined that the image signal is not normally input, the second controller 450 transmits to the first controller 350 a control signal corresponding to the abnormal state (S250).

As such, the second controller 450 may transmit to the first controller 350 a control signal corresponding to each state of the image signal input to the second input terminal B while the first controller 350 may determine based on the received control signal whether the image signal input to the second input terminal B is normal.

In the foregoing exemplary embodiment, the image processing units 300 and 400 include the first scaler 300 and the second scaler 400 corresponding to the plurality of input terminals A and B, respectively, but the present invention is not limited thereto. Alternatively, the image processing unit may include a single scaler 500, which will be described according to a second exemplary embodiment hereinafter.

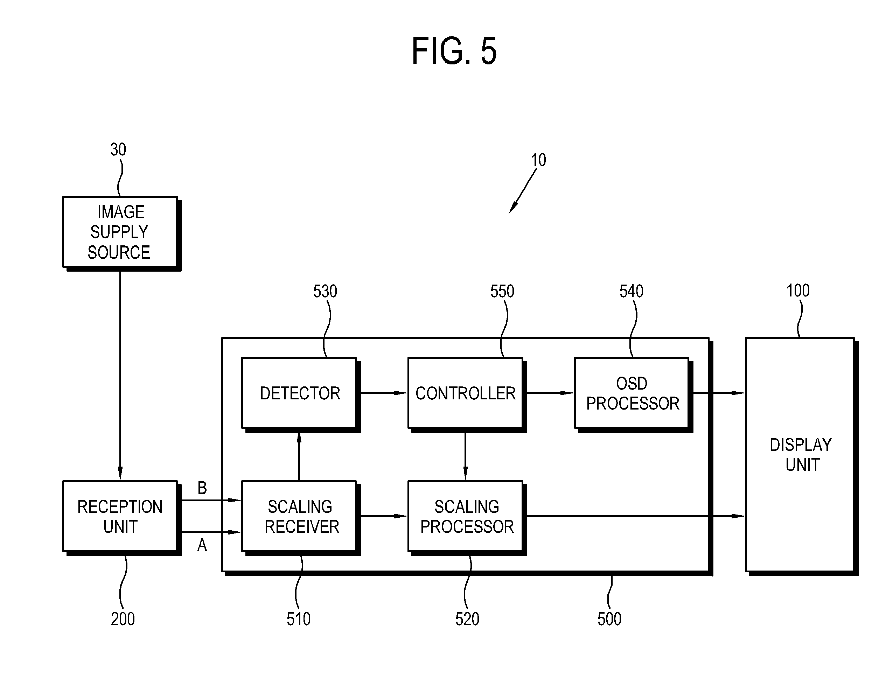

FIG. 5 is a block diagram of a display apparatus 10 according to a second exemplary embodiment of the present invention.

As shown therein, the display apparatus 10 according to the present exemplary embodiment includes a display unit 100, a reception unit 200 to receive an image signal from an image supply source 30, and a scaler which includes a plurality of input terminals A and B receiving an image signal from the reception unit 200 and scales an image signal.

The scaler 500 includes a scaling receiver 510 which receives an image signal through the plurality of input terminals A and B, a scaling processor 520 which processes an image signal input to the scaling receiver 510, a detector 530 which detects whether the image signal input to the scaling receiver 510 corresponds to the dual-link, an OSD processor 540 which displays an OSD message on the display unit 100, and a controller 550 which controls operations of sub elements of the scaler 500.

The scaling receiver 510 may receive an image signal input through the plurality of input terminals A and B. If the image signal corresponds to the single-link, it is input through the first input terminal A. If the image signal corresponds to the dual-link, it is input through the first and second input terminals A and B, respectively. The scaling receiver 510 transmits the input image signal to the scaling processor 520.

If the image signal corresponding to the dual-link is input, a part of the divided image signal input through the first input terminal A is referred to as a first signal, and the rest of the divided image signal input through the second input terminal B is referred to as a second signal. Hereinafter, the first and second signals are not separate signals but a single image signal which is divided and input to the plurality of input terminals A and B. The first and second signals are referred to as such for purposes of convenience.

The detector 530 detects whether the received first signal is a part of the divided image signal, i.e., whether the first image corresponds to the dual-link. If it is detected that the first signal corresponds to the dual-link, the detector 530 detects whether the second signal corresponds to a normal dual-link signal, i.e., whether the second signal is the rest of the divided image signal. The detector 530 transmits the detection result to the controller 550.

The detection method of the detector 530 is not limited and may vary. According to the present exemplary embodiment, the detector 530 may calculate a horizontal synchronous signal frequency and a vertical synchronous signal frequency from the first signal, and detect based on the calculated frequencies whether the first signal corresponds to the dual-link.

The detector 530 may extract a synchronous signal from the second signal, and may determine that the second signal corresponds to a normal dual-link signal if the timing of synchronous signals of the first and second signals is the same.

Depending on the detection result of the detector 530, if the first signal and the second signal corresponding to the dual-link are normally input, the controller 550 controls the scaling processor 520 to process an image signal which is a combination of the first and second signals.

If the first signal corresponds to the dual-link and the second signal is not normally input, the controller 550 controls the OSD processor 540 to display an error message on the display unit 100.

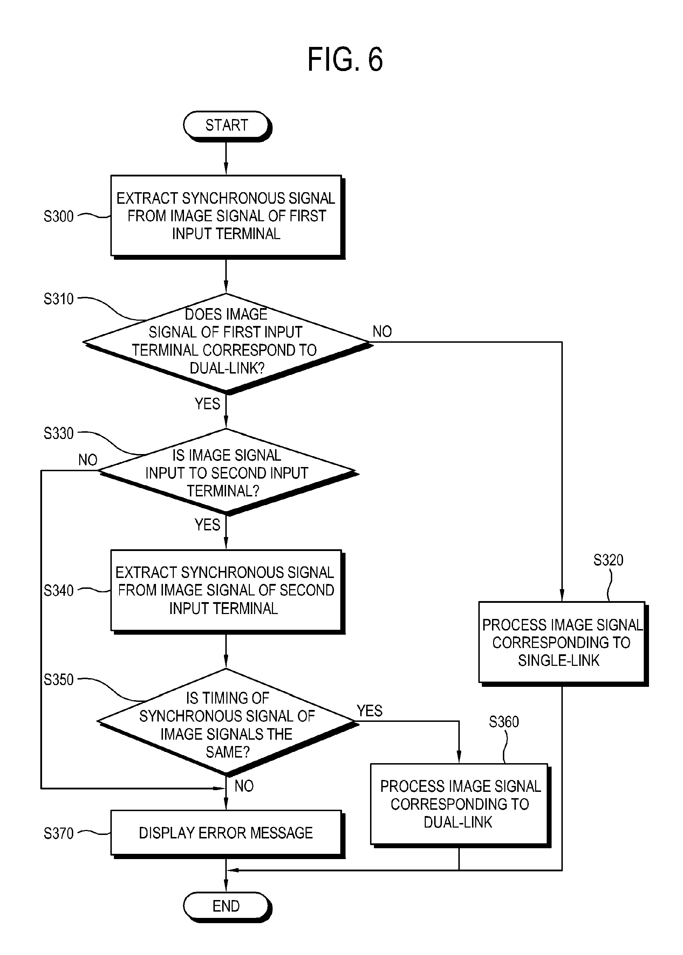

Hereinafter, a control process of the display apparatus 10 according to the present exemplary embodiment will be described with reference to FIG. 6. FIG. 6 is a control flowchart of the control process of the display apparatus 10.

As shown therein, the detector 530 detects a synchronous signal from the image signal of the first input terminal A (S300), and determines based on the synchronous signal whether the image signal corresponds to the dual-link (S310).

If it is determined that the image signal does not correspond to the dual-link, the controller 550 processes the image signal corresponding to the single-link (S320).

If it is determined that the image signal corresponds to the dual-link, the detector 530 determines whether the image signal is input to the second input terminal B (S330).

If it is determined that the image signal is input to the second input terminal B, the detector 530 extracts a synchronous signal from the image signal input to the second input terminal B (S340). Based on the extracted synchronous signal, the detector 530 determines whether the timing of the synchronous signal of the image signal input to the first and second input terminals A and B, respectively, is the same (S350).

If the detector 530 determines that the timings of the synchronous signals of the image signal input to the input terminal A and B are the same, the controller 550 determines that the image signal corresponding to the dual-link is normally input to the input terminals A and B and processes the image signal corresponding to the dual-link (S360).

If it is determined that the timings of the synchronous signals are not the same, the controller 550 determines that the image signal input to at least one of the input terminals A and B is not normal and displays the error message (S370).

If it is determined at operation S330 that the image signal is not input to the second input terminal B, the controller 550 determines that this is the abnormal state and displays the error message (S370).

In the foregoing exemplary embodiment, the configuration of detecting the image signal input to the plurality of input terminals A and of displaying the error message is incorporated into the image processing units, but the present invention is not limited thereto.
Alternatively, such configuration may be separately provided.

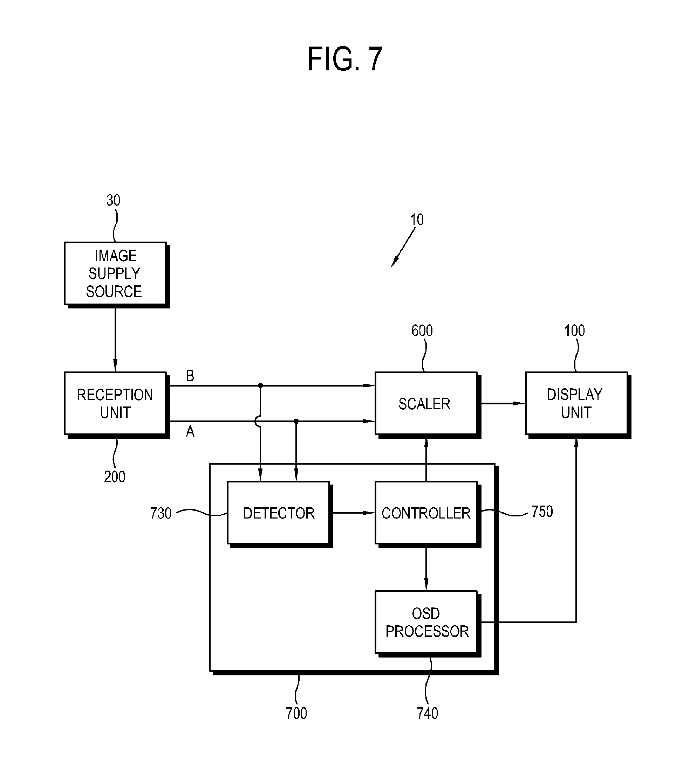

With the foregoing configuration, a third exemplary embodiment of the present invention will be described with reference to FIG. 7.

FIG. 7 is a block diagram of a display apparatus 10 according to the present exemplary embodiment.

As shown therein, the display apparatus 10 according to the present exemplary embodiment includes a display unit 100, a reception unit 200 and a scaler 600. An image signal which is transmitted from an image supply source 30 is received by the reception unit 200 and input to the scaler 600 through the plurality of input terminals A and B. The scaler 600 scales the input image signal and displays the image signal on the display unit 100.

Here, the display apparatus 10 includes a detection unit 700 which detects whether the image signal input to the plurality of input terminals A and B corresponds to the dual-link and displays an error message if it determines based on the detection result that the image signal is not normally input.

The image signal detection unit 400 includes a detector 730, an OSD processor 740 and a controller 750, which are the same as those according to the first and second exemplary embodiments of the present invention. Thus, detailed description will be avoided.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. A display apparatus comprising:
a display unit;
a reception unit which receives an image signal from an image supply source;
an image processing unit which comprises a plurality of input terminals that receive the image signal from the reception unit, wherein if the image signal is a divided image signal, the image processing unit processes and combines parts of the divided image signal to output a processed image signal to be displayed on the display unit; and
a controller which controls the display unit to display thereon an error message if one of the input terminals receives a first part of the divided image and the another one of the input terminals does not receive a second part of the divided image signal.

2. The display apparatus according to claim 1, wherein the image processing unit further comprises a detector which detects whether the image signal is the divided image signal based on a synchronous signal frequency of the image signal.

3. The display apparatus according to claim 2, wherein the detector uses a table to detect whether the image signal is the divided image signal based on at least one of a horizontal synchronous signal frequency and a vertical synchronous signal frequency.

4. The display apparatus according to claim 1, 2 or 3 wherein the image processing unit further comprises a first scaler which scales a first part of the divided image signal input to a first terminal of the input terminals;
a second scaler which scales a second part of the divided image signal input to a second terminal of the input terminals, and
the controller determines during a preset time whether the second part of the divided image signal is input to the second scaler if it is determined that the first part of the divided image signal is input to the first scaler, and displays the error message if it is determined that the second part of the divided image signal is not input to the second scaler during the preset time.

5. The display apparatus according to any of claims 1-4, wherein the image processing unit further comprises a scaler which scales a first signal input to a first terminal of the plurality of input terminals and a second signal input to a second terminal of the plurality of terminals, and
the controller determines whether synchronous signal timings are the same for the first and second signals if it is determined that the first signal is a first part of the divided image signal, and determines that the second signal is a second part of the divided image signal if the synchronous signal timing is the same.

6. The display apparatus according to any of claims 1-5, wherein the reception unit receives the image signal through a Digital Visual Interface standard cable from the image supply source, and the controller controls the error message to include information about the cable.

7. The display apparatus according to any of claims 1-6, wherein the display unit comprises a light-emitting diode (LED), and the controller controls the LED to emit light or flicker to display the error message.

8. A control method of a display apparatus, the control method comprising:
receiving an image signal from an image supply source;
if the image signal is a divided image signal and each of a plurality of parts of the divided image signal are received by a plurality of input terminals, processing and combining the parts of the divided image signal to generate a processed image signal and displaying the processed image signal on a display unit ; and
if a first part of the divided image signal is received by one of the input terminals and another one of the input terminals does not receive a second part of the divided image signal, displaying an error message on the display unit.

9. The control method according to claim 8, wherein the displaying the error message comprises determining whether the image signal is the divided image signal based on a synchronous signal frequency of the image signal.

10. The control method according to claim 9, wherein the determining whether the image signal is the divided image signal comprises using a prestored table to determine whether the image signal is the divided signal based on at least one of a horizontal synchronous signal frequency and a vertical synchronous signal frequency of the image signal.

11. The control method according to claim 8,9 or 10 wherein the display apparatus comprises a first scaler and a second scaler, and
the displaying the error message comprises determining during a preset time whether a second part of the divided image signal is input to the second scaler if it is determined that a first part of the divided image signal is input to the first scaler, and displaying the error message if it is determined that the second part of the divided image signal is not input to the second scaler during the preset time.

12. The control method according to any of claims 8-11, wherein the plurality of input terminals comprise a first input terminal and a second input terminal which receive a first signal and a second signal, respectively, and
the displaying the error message comprises determining whether synchronous signal timings are the same for the first and second signals if it is determined that the first signal is a part of the divided image signal and determining that the second signal is a second part of the divided image signal if the synchronous signal timing is the same.

13. The control method according to any of claims 8-12, wherein the display apparatus receives the image signal through a Digital Visual Interface standard cable from the image supply source, and the displaying the error message comprises displaying the error message including information about the cable.

14. The control method according to any of claims 8-13, wherein the display apparatus comprises a light-emitting diode (LED), and the displaying the error message comprises displaying the error message by emitting light or flickering a light of the LED.
